# EUROPEAN PATENT APPLICATION

(11) **EP 2 880 973 A1**
(43) Date of publication of application: **10.06.2015**
(21) Application number: 14190977.0
(22) Date of filing: 30.10.2014
(51) Int. Cl.: A01K 39/012

(54) **Tube type bird feeder**

(30) Priority: 19.11.2013 CA 2833504
(71) Applicant: Brome Bird Care Inc., Lac Brome QC J0E 1V0 (CA)
(72) Inventor: Cote, Paul, L., Lac Brome, Québec J0E 1V0 (US)
(74) Representative: Graf Glück Kritzenberger

(57) **Abstract**

A tube type bird feeder (10) comprising a seed tube having a side wall (54) with at least one feed opening therein, a cover (12) removably engaged with the seed tube proximate a top marginal edge of the seed tube, at least one perch (18) mounted on the seed tube proximate the feed opening, and a base member (16) removably secured to the seed tube adjacent the bottom marginal edge of the side wall.

## Description

### FIELD OF THE INVENTION

The present invention relates to bird feeders and more particularly, relates to improvements in a tube type bird feeder.

### BACKGROUND OF THE INVENTION

Tube type bird feeders are well known in the art. They basically comprise a seed retaining container of a tubular configuration which is usually transparent in nature. A base seals the bottom while a cover is provided. The cover can be removed so as to provide access to the seed container for filling of the same. Normally, one or more perches are provided proximate the one or more seed access openings in the seed container.

Most tube bird feeders are designed to be as inexpensive as possible. They are conventionally manufactured in a manner so as to not encourage disassembly of the same. However, in so doing, this can cause problems. One of the problems associated with all types of bird feeders is cleanliness. Unless a proper design is provided, the seed will, over a period of time, become mouldy. It is also subject to contamination by bird droppings. Without proper care, this can lead to illness among the bird population using the feeder.

A further problem associated with tube bird feeders pertains to ventilation of the seed retaining container. Due to the nature of bird feeders, most are exposed to weather and as a consequence, moisture frequently reaches the inside of the seed retaining container. This can cause problems for the seeds which remain therein as mold is a persistent problem.

### SUMMARY OF THE INVENTION

It is an object of the present invention to provide an improved tube type bird feeder wherein the components of the bird feeder can easily be disassembled and assembled.

It is a further object of the present invention to provide for ventilation of the tube type bird feeder.

According to one aspect of the invention, there is a provided a bird feeder comprising a seed tube having a side wall, at least one feed opening in the side wall, the side wall having a top marginal edge and a bottom marginal edge, a cover removably engaged with the seed tube proximate the top marginal edge, at least one perch mounted on the seed tube proximate the feed opening, and a base member removably secured to the seed tube adjacent the bottom marginal edge.

A traditional tube bird feeder comprises a hollow tube having feed access openings therein. Perches are usually at least one rod which passes through the tube and extends outwardly. They are secured in position by mechanical means. A base prevents the seed from exiting and it is also usually secured in place by mechanical fasteners. The cover arrangement will again usually comprise a wire member which will engage with the hollow tube either directly or indirectly. The cover slides on the wire member and access to the tube is gained by tilting the wire member to the side while the cover is elevated.

The conventional tube bird feeder is not easily disassembled and tools are usually required. The bird feeder of the instant invention overcomes many of the disadvantages of the known tube bird feeder and can be assembled and disassembled without the use of tools.

In greater detail, the bird feeder of the present invention may utilize a conventional seed tube with an open top and an open bottom. Conventionally, the seed tubes are formed of a plastic material and are transparent although other materials can be utilized.

The seed tube is provided with at least one feed access opening and in a preferred embodiment, has two seed access openings which are diametrically opposed. Each seed access opening preferably has a perch mounted proximate thereto to enable a bird to perch while feeding.

The bird feeder will also have a cover which is designed to seal the open top end. The cover is preferably removable and retained such that access may be had to the interior of the tube for filling of the same. Most covers utilized for tube feeders are held in a non rotatable manner. In a preferred embodiment, the bail holding the bird feeder through the cover is mounted such that the bird feeder can rotate about the bail.

The base member is removably secured to the seed tube adjacent a bottom marginal edge of the tube. In a preferred embodiment, the base member has a protrusion which will engage with an aperture formed in the seed tube proximate the aforementioned bottom marginal edge.

The base member is preferably formed of an upper base portion and a lower base portion. They are retained together in a non rotatable manner. The upper base portion will include a pair of half walls defining the top thereof and upon which the seed in the seed tube will be supported. Preferably the two half walls have apertures therein to permit drainage and ventilation.

The locking of the base member to the seed tube by the protrusion can rely on the flexibility of the seed tube or alternatively, the base member may be designed to have a certain flexibility. The protrusion is such that the seed tube can fit within and be slidable thereover due to the shape of the front or face wall of the protrusion as will be described in greater detail hereinbelow.

The cover is releasably secured directly to the tube. The cover will include at least one protrusion which will engage with an aperture formed in the seed tube proximate an upper marginal edge of the seed tube. Due to the shape of the protrusion, as will be described hereinbelow, removal of the cover is easily achieved while it is securely attached to the seed tube during normal use.

The cover will include ventilation apertures formed therein, the ventilation apertures being formed in a manner that rain and the like cannot easily access the ventilation apertures.

### BRIEF DESCRIPTION OF THE DRAWINGS

Having thus generally described the invention, reference will be made to the accompanying drawings illustrating an embodiment thereof, in which:

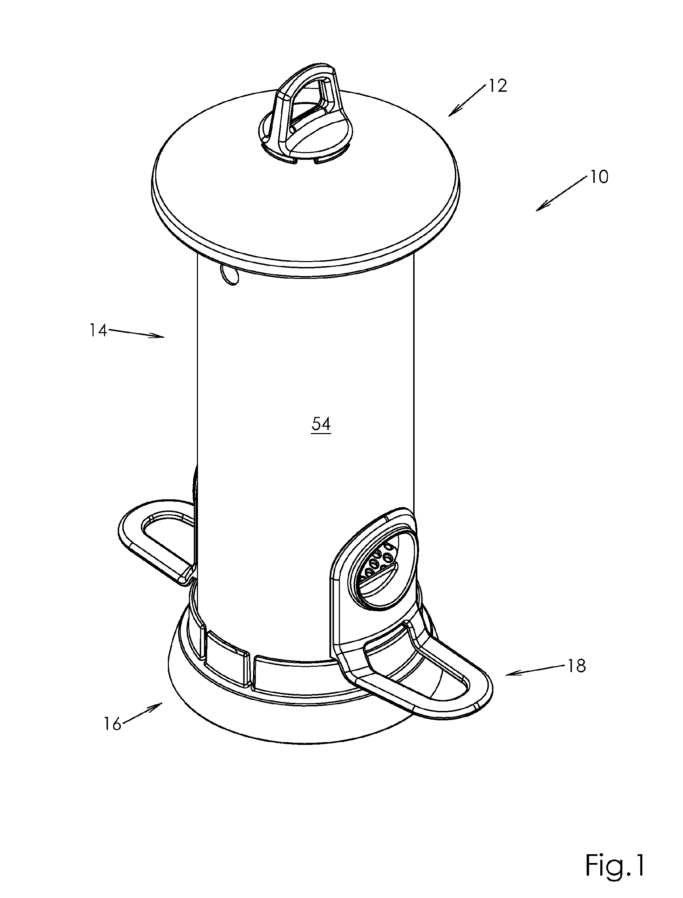

Figure 1 is a perspective view of a bird feeder according to the present invention;

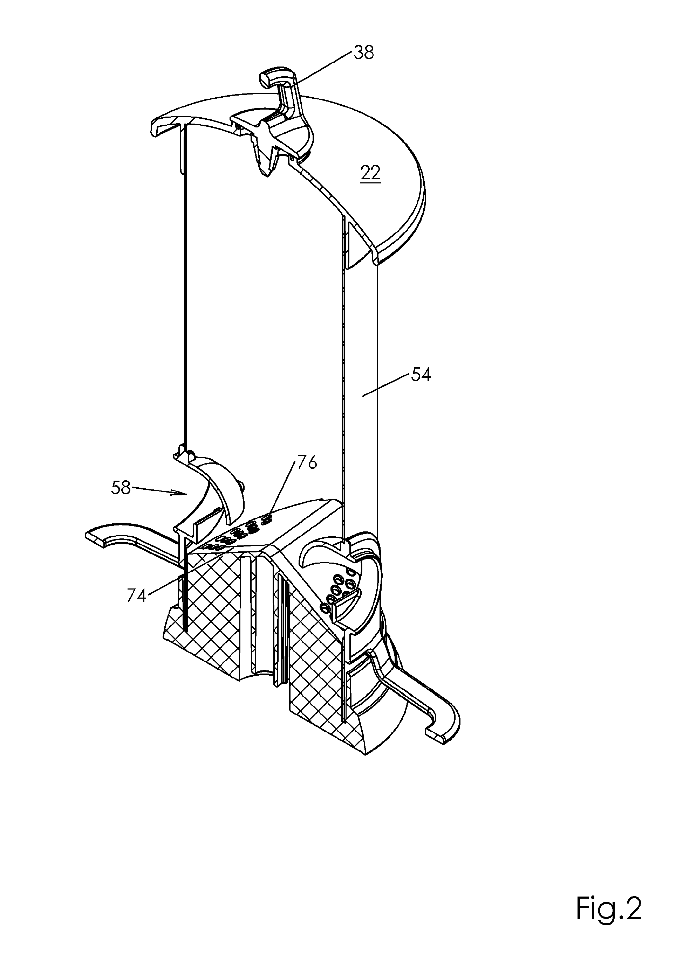

Figure 2 is a longitudinal sectional view thereof;

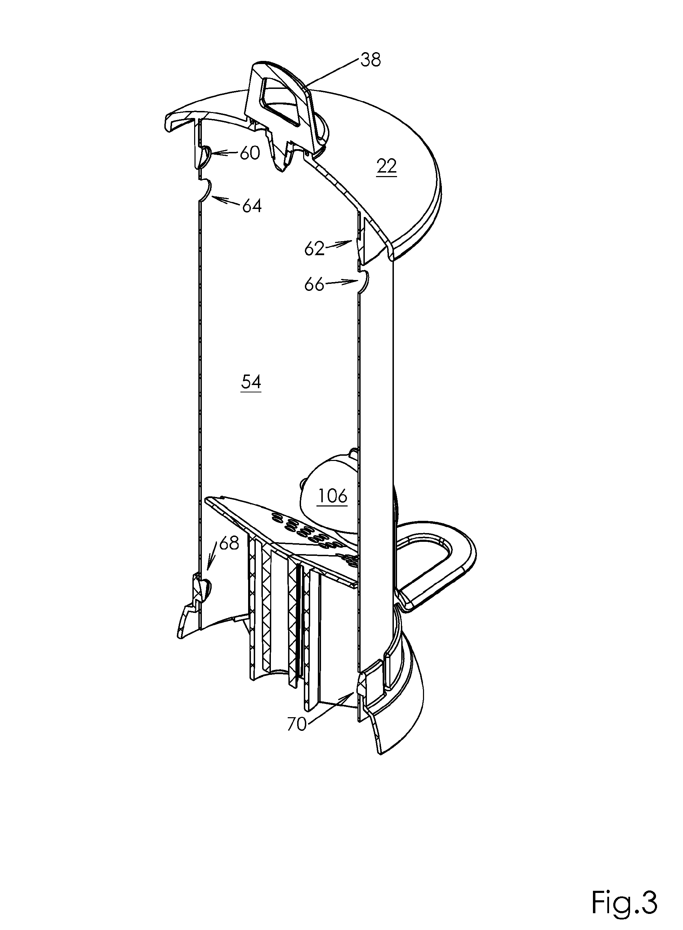

Figure 3 is a longitudinal sectional view with the bird feeder rotated 180° from the view of Figure 2;

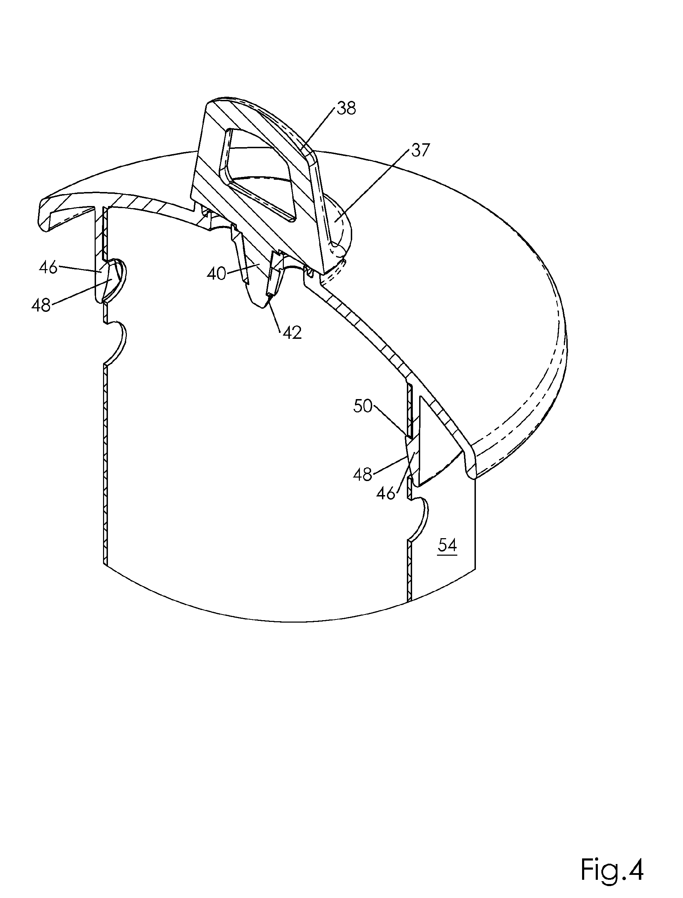

Figure 4 is a cross-sectional view illustrating the upper portion of the bird feeder;

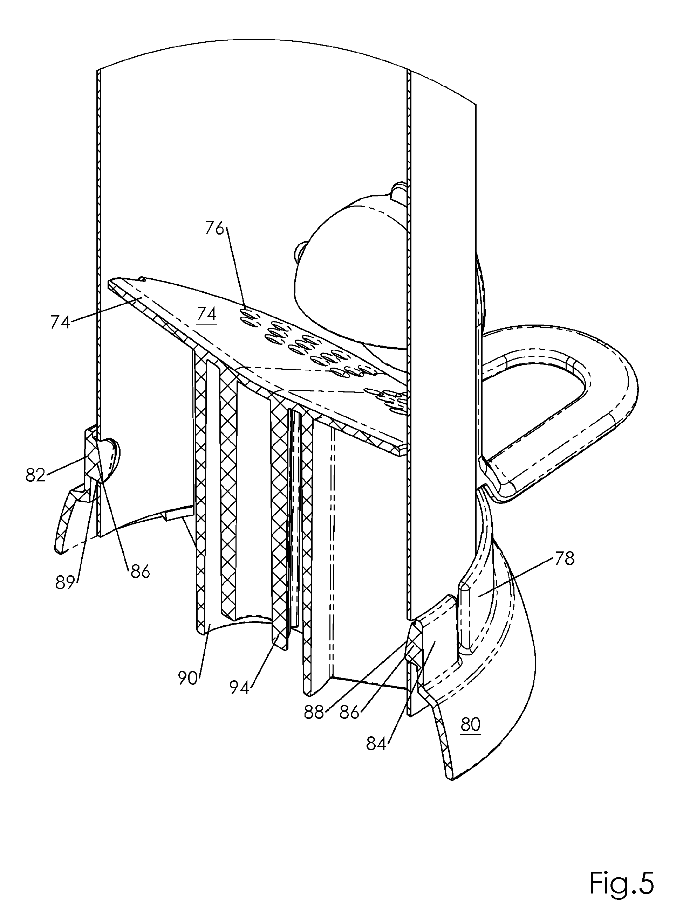

Figure 5 is a cross-sectional view illustrating the bottom portion of the bird feeder;

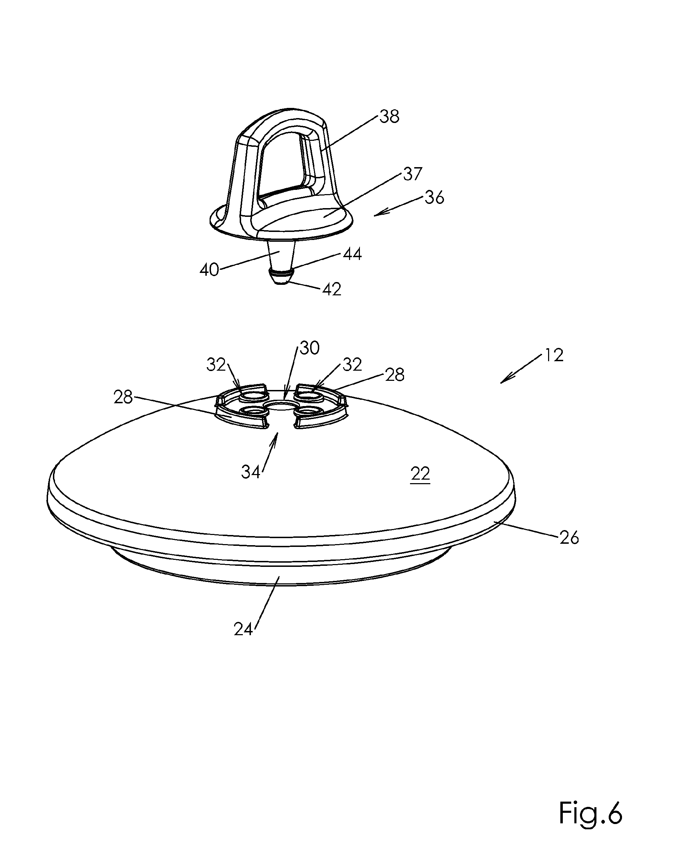

Figure 6 is an exploded view of the cover and bail;

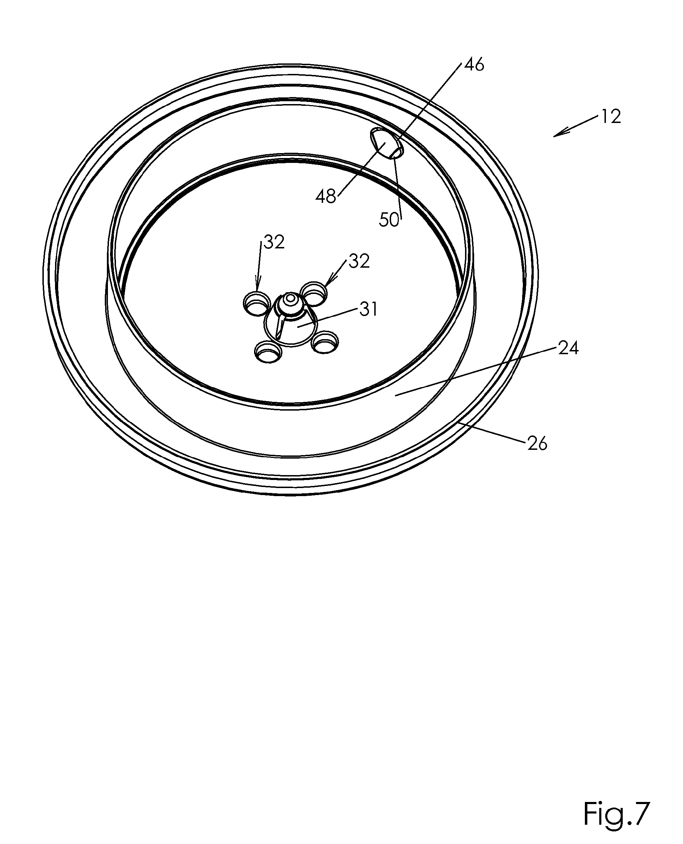

Figure 7 is a bottom view of the cover with the bail connected thereto;

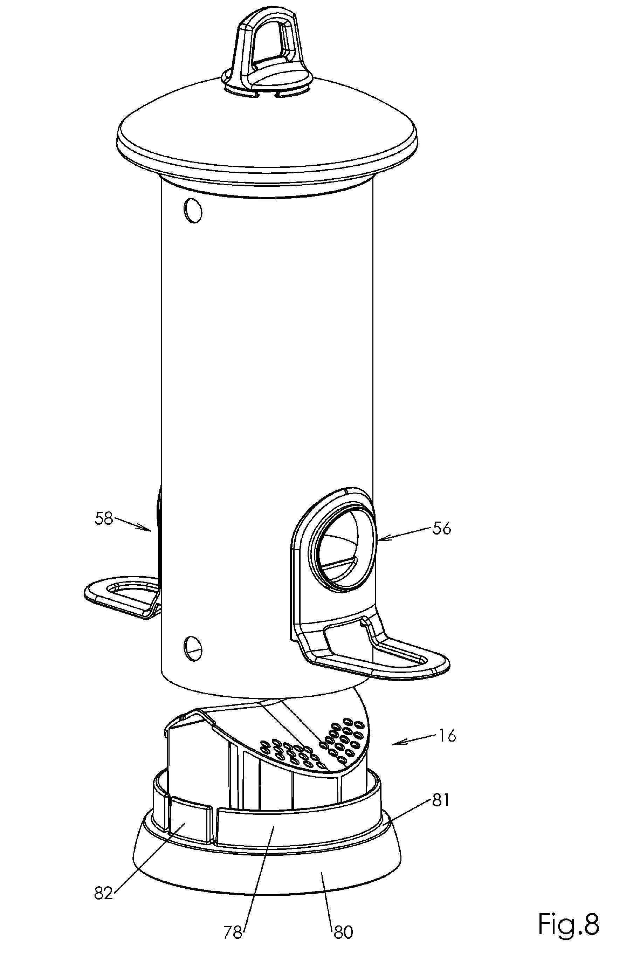

Figure 8 is an exploded perspective view of the tube container and bottom portion;
Figure 9 is a perspective view from the bottom of the exploded view of Figure 8;

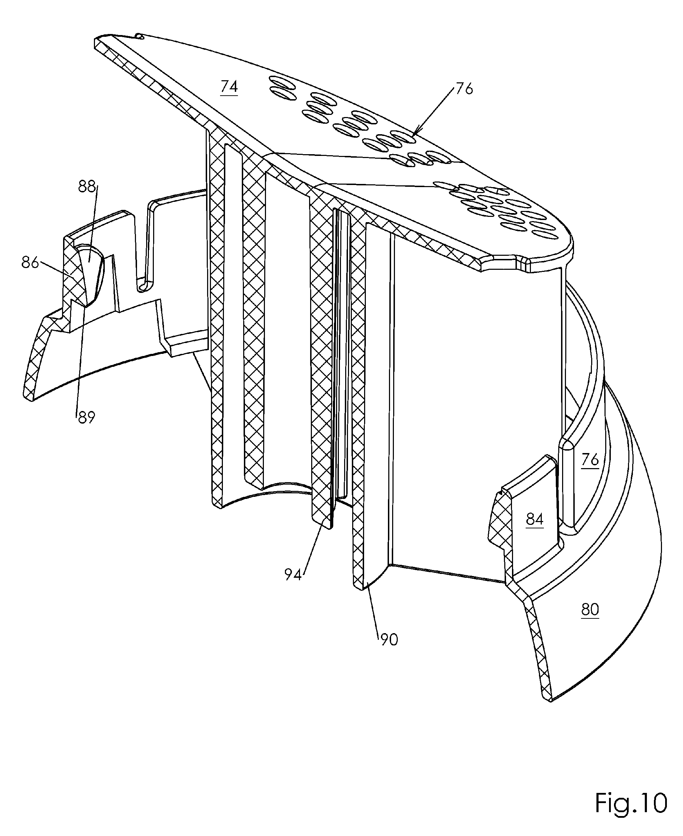

Figure 10 is a detailed cross-sectional view of the bottom or base portion of the bird feeder; and
Figure 11 is a perspective view illustrating insertion of a perch and associated structure.

### DETAILED DESCRIPTION OF THE INVENTION

Referring to the drawings in greater detail and by reference characters thereto, there is illustrated a bird feeder which is generally designated by reference numeral 10.

Bird feeder 10 comprises four different components - a cover generally designated by reference numeral 12, a seed container generally designated by reference numeral 14, a base structure generally designated by reference numeral 16, and a perch structure generally designated by reference numeral 18.

Cover 12 is formed with a domed top wall 22 and a downwardly extending cylindrical side wall 24. It will be noted that cylindrical side wall 24 is spaced inwardly of domed top wall 22. Domed top wall 22 terminates with an outer downwardly extending flange 26.

Domed top wall 22 is also provided with upwardly extending protrusions 28 which have spaces 34 therebetween. Located centrally of domed top wall 22 is a central aperture 30. Venting apertures 32 are provided proximate central aperture 30. On the inner surface of domed top wall 22, there is provided a plurality of downwardly extending tabs 31.

A bail generally designated by reference numeral 36 includes an inverted U-shaped portion 38 for hanging from a hook or the like. A leg 40 extends downwardly; leg 40 has an expanded end 42 which provides a seating wall or ledge 44. The arrangement is such that leg 40 passes through central aperture 30 and seating wall 44 engages with tabs 31 to retain the bail secured to the cover. Bail 36 also includes a horizontal wall 37 which engages with upwardly extending protrusions 28 such that spaces 34 provide air communication with venting apertures 32 to thereby permit air exchange between seed container 14 and the exterior

The inner surface of cylindrical side wall 24 includes a pair of protrusions 46 each having a front face 48 which tapers upwardly and outwardly from the point where it merges with the surface of side wall 24. At its upper portion, there is provided a top wall 50 for engaging seed container 14 as will be discussed in greater detail hereinbelow.

Seed container 14 is defined by a tubular side wall 54 which is preferably formed of a transparent flexible plastic material. A pair of seed access openings 56 and 58 are provided and preferably they are diametrically opposed for aesthetic reasons. A first set of upper apertures 60, 62 are provided near the top marginal edge of tubular side wall 54 while a second pair of upper apertures 64, 66 are spaced therefrom and a little bit lower. Proximate the lower marginal edge, there are provided diametrically opposed lower apertures 68, 70.

Base structure 16 includes a seed support wall 74 upon which the seed rests and is directed outwardly proximate seed openings 56, 58. Drainage apertures 76 are provided in wall 74.

Base structure 16 also includes an upper side wall 78 and a lower side wall 80. Extending between the top of lower side wall 80 and the base of upper side wall 78 is a horizontal wall section 81. It will be noted that upper side wall 78 includes a pair of tab members 82, 84 which provide some flexibility to that portion of upper side wall 78. Mounted on the inner surface of tabs 82, 84 are protrusions 86. Each protrusion 86 has a tapering front wall 88 for reasons which will become apparent hereinbelow. Tapering front wall 88 terminates in a bottom wall 89 which forms a stop for engaging with seed container 14 as will be discussed in greater detail hereinbelow.

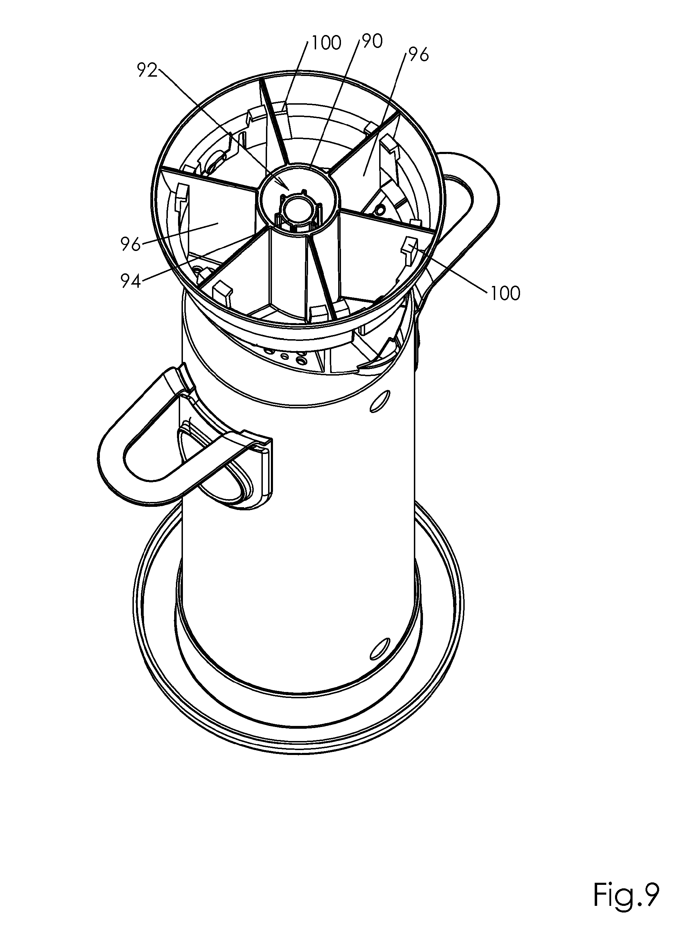

As may be seen in Figure 9, base structure 16 also includes a plurality of ribs 96 extending between center wall 90 and lower side wall 80. Mounted at the outer end of ribs 96 are stoppers 100 which support seed tube 14.

At its lower end, base structure 16 is provided with a center wall 90 which defines a recess 92 for receiving a post which supports the bird feeder. Located within recess 92 is a circular structure 94. This arrangement is such that recess 92 can accommodate either of the commonly sized poles. Thus, a larger post will be retained by center wall 90. Alternatively, a smaller post may have a size such that it will fit about circular structure 94.

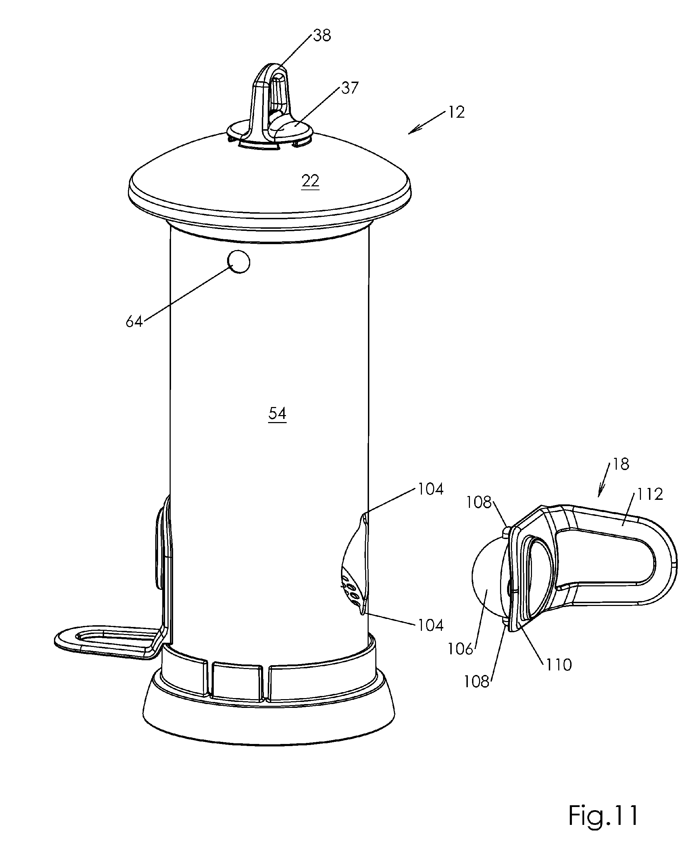

The bird feeder preferably includes a perch structure as shown. As may be best seen in Figure 11, seed access openings 56 and 58 are similar and thus, only one will be described herein. Formed at the top and bottom portions of seed access opening 56 are a pair of smaller recesses 104. Perch structure 18 includes a baffle 106 which has a pair of protrusions 108 extending outwardly therefrom. Perch structure 18 also includes an upper plate 110 which fits about feed access opening 56 and a lower U-shaped perch 112.

For assembly, perch structure 18 is initially set in place by inserting the baffle portion to the interior whereby protrusions 108 will fit through recesses 104. The perch structure 18 is then rotated to its proper position.

To assemble the structure, base structure 16 and the bottom of seed tube 14 may be assembled such that the bottom of side wall 54 is inserted interiorly of upper side wall 78. The tapering front wall 88 permits the side wall to enter and seat on stoppers 100. A rotational movement can be given until protrusions 86 seat in lower apertures 68, 70. The base 16 is retained on seed tube 14 due to engagement with bottom wall 89.

It will be noted that the bottom of plate portion 110 is sized such that upper side wall 78 seats thereagainst.

Cover 12 may then be placed in position with protrusions 46 on cylindrical side wall 24 seating within upper apertures 60, 62.

The bird feeder 10 is provided with ventilation extending from the bottom up through the seed container with the upper ventilation being accomplished with apertures 64, 66 and the venting through venting apertures 32.

It will be understood that the above described embodiments are for purposes of illustration only and that changes and modifications may be made thereto without departing from the spirit and scope of the invention.

## Claims

1. A bird feeder comprising:
a seed tube having a side wall, at least one feed opening in said side wall, said side wall having a top marginal edge and a bottom marginal edge;
a cover removably engaged with said seed tube proximate said top marginal edge;
at least one perch mounted on said seed tube proximate said feed opening; and
a base member removably secured to said seed tube adjacent said bottom marginal edge.

2. The bird feeder of Claim 1 wherein said cover includes a downwardly extending wall, said downwardly extending wall being sized to fit over said top marginal edge of said seed tube, said seed tube having an aperture formed proximate said top marginal edge, said downwardly extending wall having a protrusion formed thereon, said protrusion having a front wall, said front wall having a tapered portion, said tapered portion extending upwardly and outwardly from said downwardly extending wall, said protrusion having a top wall forming a stop engaging with said aperture in said seed tube.

3. The bird feeder of Claim 1 wherein said base includes an upwardly extending wall, said upwardly extending wall having at least one protrusion thereon, said seed tube having at least one aperture located proximate said bottom marginal edge, said upwardly extending wall on said base having slits formed therein to render a portion of said wall flexible.

4. The bird feeder of Claim 1 further including a plurality of ventilating apertures formed in said cover.

5. The bird feeder of Claim 4 wherein said cover has a bail having a hook portion and a leg portion, said leg being sized and configured to pass through an opening in said top wall and be retained by said downwardly extending structure in a manner such that said bail cannot be removed while permitting rotatable movement thereof, said bail having an outwardly extending wall, said wall being spaced from said ventilation apertures formed in said cover.

6. The bird feeder of Claim 5 wherein said bail includes a horizontal wall intermediate said hooked portion and said leg portion, said horizontal wall being spaced from said ventilation apertures to permit movement of air through said ventilation apertures.

7. The bird feeder of Claim 6 wherein said top wall includes at least one spacing member extending upwardly therefrom, said spacing member including at least one space therein, said space permitting air flow from said ventilation apertures to the exterior.

8. The bird feeder of Claim 3 wherein said seed tube has a pair of lower apertures proximate said bottom marginal edge, said seed tube having a second aperture located proximate said bottom marginal edge, first and second protrusions on said upwardly extending wall, each of said protrusions having a front wall, said front walls having a tapered portion, said tapered portion extending downwardly and outwardly from said upwardly extending wall, said protrusions each having a bottom wall forming a stop engaging a respective aperture in said seed tube.

9. The bird feeder of Claim 3 wherein said seed tube has a second pair of upper apertures formed therein, said second pair of upper apertures permitting ventilation of said seed tube.

10. The bird feeder of Claim 8 wherein said first and second protrusions are formed on flexible tab members forming a portion of said upwardly extending wall.
